# FASCICULE DE BREVET EUROPEEN

(11) **EP 1 616 797 B1**
(45) Date de publication et mention de la délivrance du brevet: **19.03.2008**
(21) Numéro de dépôt: 04016524.3
(22) Date de dépôt: 14.07.2004
(51) Int. Cl.: B65C 3/08, B65C 9/18, B65C 9/25, B65D 23/08, B29C 63/00

(54) **Procédé pour la fabrication d'un conteneur comportant une étiquette sous forme de film étiré**
Herstellungsverfahren eines Behälters mit Streckfolienetikett
Method for manufacturing a container comprising a label of stretched film

(43) Date de publication de la demande: 18.01.2006
(73) Titulaire: Nestlé Waters Management & Technology, 92130 Issy-les-Moulineaux (FR)
(72) Inventeur: Cerveny, Jean-Paul, 88800 Vittel (FR); Durand, Cyrille, 88800 Vittel (FR); Laupie, Marc, 88440 Nomexy (FR)
(74) Mandataire: Thomas, Alain

(56) Documents cités:
- EP-A- 1 400 455
- WO-A-97/01484

## Description

La présente invention concerne un procédé d'obtention d'un conteneur selon le préambule de la revendication 1, ainsi qu'un dispositif pour la mise en oeuvre de ce procédé selon le préambule de la revendication 4, et comme décrit dans le document EP 1 400 455 A.

Il existe déjà des systèmes d'étiquettage de bouteilles aussi bien à poser sur des conteneurs en verre qu'en matière plastique. Le système le plus connu est l'étiquettage avec des étiquettes en papier. L'inconvénient de cette solution est que l'on ne peut étiqueter que des conteneurs de forme sensiblement cylindrique. Il existe aussi la possibilité d'étiqueter avec des manchons rétractables ou étirables en plastique sur tout le pourtour de la bouteille. Dans ce cas, il n'y a pas de limitation sur la forme, c'est-à-dire qu'il est possible de poser ces manchons sur des conteneurs autres que sensiblement cylindrique. Dans ce second cas, cependant, l'inconvénient est que si on déforme l'emballage, le manchon va se désolidariser du conteneur et on va obtenir un emballage en deux parties. D'autre part, dans le cas de ces manchons rétractables, on utilise une quantité élévée de matière.

Le Document WO 97/01484 décrit un procédé d'application d'un matériau d'étiquetage élastique à des conteneurs, dans lequel les étiquettes sont dans un état étiré lorsqu'elles sont appliquées sur la paroi du conteneur, ce dernier étant en mouvenent de rotation et/ou de translation pendant l'opération d'étiquetage.

Le document EP 1 400 455 qui est considéré comme le document de l'art antérieur le plus proche, décrit un procédé d'étiquetage dans lequel on amène sur un carrousel des conteneurs, puis on amène sur une roue de chauffage le film d'étiquetage depuis un rouleau, puis le carrousel et la roue de chauffage se rejoignant sur une zone de contact de leur circonférence, puis on chauffe le film comprenant de la colle, puis on applique le film chauffé sur la surface extérieure du conteneur.

Le but de la présente invention est de disposer d'un procédé d'obtention d'un conteneur n'ayant pas une forme sensiblement cylindrique sur lequel on dispose une étiquette de surface plus réduite, qui fait partie intégrante du corps du conteneur, si on déforme ledit conteneur.

Le conteneur, fabriqué selon ce procédé, comprend un corps, un col et un élément de fermeture, ledit corps ayant une surface de courbure positive et comportant sur sa surface extérieure un film étiré couvrant sa surface de façon partielle en un matériau plastique différent ou identique de celui du corps dudit conteneur.

Le conteneur peut être en n'importe quel matériau, par exemple en plastique, en verre ou en tout autre matériau connu dans le domaine de l'emballage. Le conteneur est de préférence en un matériau plastique.

Par surface de courbure positive, dans la présente description, on entend un conteneur ayant sensiblement une forme ovoïde ou sphérique, ou une gravure en relief.

Il est important que selon l'invention, le film recouvrant la surface extérieure du conteneur, ne recouvre ladite surface que partiellement. Par partiellement, dans la présente description, on entend un recouvrement de moins de 50 % de la surface externe du conteneur. La forme du film appliqué sur l'extérieur du conteneur n'est pas critique. Ce film est de préférence de forme sensiblement circulaire ou elliptique. Le film pourrait cependant aussi être de forme carrée ou rectangulaire dans le cas d'une gravure en relief.

Comme mentionné ci-dessus, le matériau du film appliqué sur le conteneur peut être le même ou différent de celui du matériau dudit conteneur. Dans la première forme de réalisation, on utilise le même matériau : dans ce cas, le matériau plastique est choisi dans le groupe constitué par du PET, du PE, du PVC, du PP, du PS et des multicouches avec ou sans barrière oxygène.

Dans une seconde forme de réalisation, les matériaux sont différents. Dans ce cas, le matériau du conteneur est choisi parmi les matériaux mentionnés ci-dessus. Le matériau du film peut aussi être choisi parmi les matériaux mentionnés ci-dessus avec en plus la possibilité d'utiliser du PEBD.

La combinaison préférable est le conteneur en PET et le film en PEBD.

Le film est étiré et collé sur le conteneur. Pour le collage, il y a deux possibilités, soit le film est préencollé lors de sa fabrication, soit on dispose la colle au moment de la pose dudit film avant ou après chauffage dudit film.

Selon un autre mode de réalisation, le film étiré est imprimé. On peut dans ce cas, aussi bien prévoir des motifs en couleurs, des motifs en noir et blanc ou des hologrammes. De préférence, on utilise des motifs en couleur. L'impression des motifs peut être soit sur la face contre la surface extérieure du conteneur, soit du côté extérieur. De préférence, l'impression est sur la face contre la surface extérieure du conteneur. La raison en est que l'encre est protégée.

Le contenu du conteneur n'est pas critique. On peut aussi bien avoir un conteneur contenant un fluide, qu'un semi-fluide, qu'un produit pâteux. Le produit dans le conteneur peut être aussi bien alimentaire que non alimentaire, par exemple un produit cosmétique ou pharmaceutique. Le produit peut aussi bien être stable à température ambiante, que réfrigéré, ou même congelé.

Le conteneur comporte un élément de fermeture, qui n'est pas critique. On peut aussi bien envisager un système de bouchon à vis que une membrane scellée sur le col ou tout autre élément de fermeture. Dans une forme de réalisation, il est aussi possible de ne pas avoir d'élément de fermeture : dans ce cas, le conteneur est scellé. Ceci est possible dans le cas de conteneur pour l'alimentation entérale ou parentérale.

Le corps du récipient a une paroi ayant une épaisseur comprise entre 5 et 1500 microns. Le film collé sur l'extérieur du récipient a une épaisseur comprise entre 5 et 150 microns. De préférence, le film a une épaisseur comprise entre 5 et 60 microns.

Le conteneur, lorsqu'il est vide peut être recyclé, ce qui est un avantage pour le respect de l'environnement. D'autre part, le conteneur est basé sur une technologie permettant de faire des économies de matière, car on arrive pour un volume de conteneur donné à réduire de l'ordre de 20 à 40 % la quantité de plastique utilisé.

La présente invention concerne un procédé de fabrication du conteneur décrit ci-dessus, dans lequel
- on amène sur un carrousel des conteneurs remplis,
- on amène sur une roue de chauffage un film d'un matériau plastique depuis un rouleau, le carrousel et la roue de chauffage se rejoignant sur une zone de contact de leur circonférence,
- on dispose de la colle sur le film ou sur le conteneur et on chauffe ledit film sur tout le pourtour de la roue de chauffage, caractérisé en ce que :

- on applique le film chauffé sur la surface extérieure du conteneur, de manière à étirer le film et le coller,
- on découpe simultanément le film et
- on ressort le conteneur.
   Comme déjà mentionné ci-dessus, on peut appliquer la colle sur le film ou sur la surface extérieure du conteneur. Mais il est également possible de disposer d'un film déjà préencollé, auquel cas, il n'est plus nécessaire d'appliquer de la colle. Le type de colle utilisé n'est pas critique et peut être tout type de colle utilisé dans la technique. On peut utiliser en particulier une colle liquide. Cette colle liquide est de préférence sous forme d'aérosol pour des raisons de praticité industrielle.
   Dans le procédé selon l'invention, on chauffe le film à une température correspondant à son point de ramollissement. Le carrousel et la roue de chauffage tournent à des vitesses compatibles avec des lignes industrielles.
   La présente invention concerne en outre un dispositif pour la mise en oeuvre du procédé selon l'invention, comprenant
- un carrousel pour les conteneurs remplis,
- une roue de chauffage du film, le carrousel et la roue de chauffage ayant une zone de contact sur leur circonférence,
la roue de chauffage du film comprenant sur toute sa périphérie plusieurs postes, caractérisé en ce que chaque poste comporte un système de support du film et un système de découpe chauffant placé dans le système de support.

Le carrousel comporte des alvéoles, dans lesquelles vont se loger les différents conteneurs. Le nombre d'alvéoles n'est pas critique.

Le poste de chauffage et de découpe du film sera décrit plus ne détail en référence aux dessins ci-dessous. Le nombre de postes sur la roue de chauffage n'est pas critique. il est de préférence compris entre 5 et 40. Comme déjà mentionné ci-dessus pour le conteneur le film collé est sensiblement circulaire ou elliptique. De ce fait, le système de découpe est lui aussi sensiblement circulaire ou elliptique.

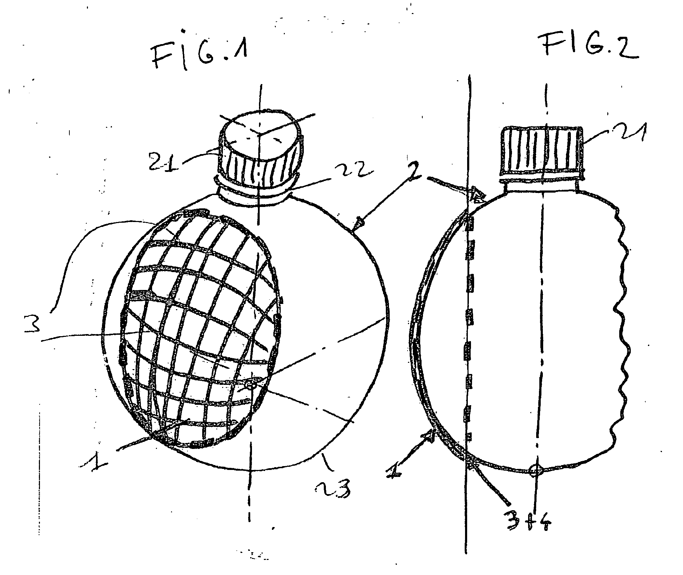

La suite de la description est faite en référence aux dessins sur lesquels
Fig. 1 est une vue schématique en perspective du conteneur,
Fig. 2 est une vue de côté du même conteneur,
Fig. 3 est une représentation schématique du dispositif selon l'invention et
Fig. 4 est une représentation schématique d'un poste sur la roue de chauffage.

Un conteneur (2) comprend un col (22), un corps (23) et un élément de fermeture (21), qui est dans ce cas un bouchon à vis. Le conteneur (2), fabriqué selon le procédé de l'invention, comporte un film (1) collé avec la colle (4) sur ledit conteneur. Le film comprend une impression (3) et il a été étiré sur la surface en 3 dimensions. Cette surface est sensiblement sphérique et on voit bien que le film ne recouvre le conteneur que partiellement. Comme déjà mentionné ci-dessus l'impression est contre la surface extérieure dudit conteneur. Le conteneur contient dans le présent cas de l'eau, il a une paroi ayant une épaisseur de 80 microns et le film a une épaisseur de 50 microns.Le film déposé a une forme sensiblement elliptique.

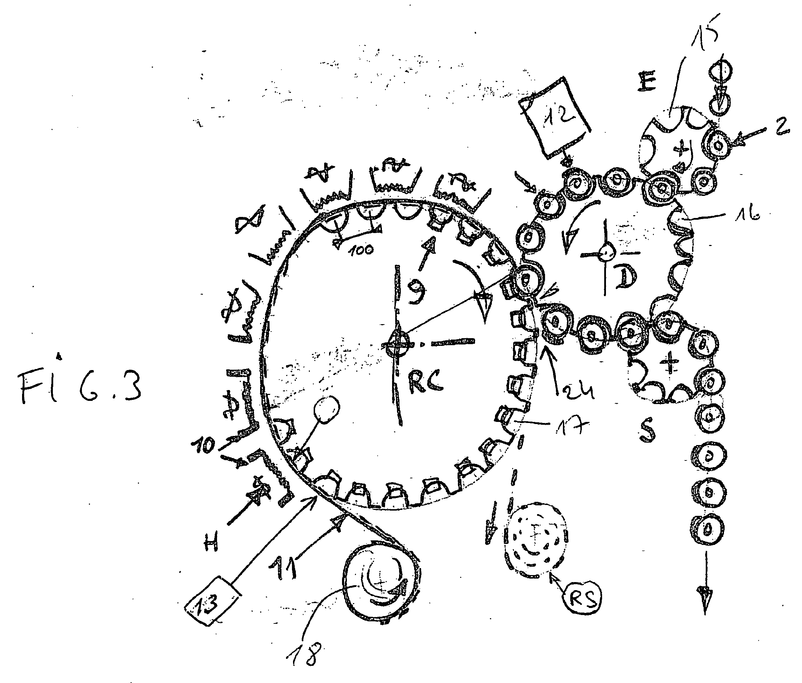

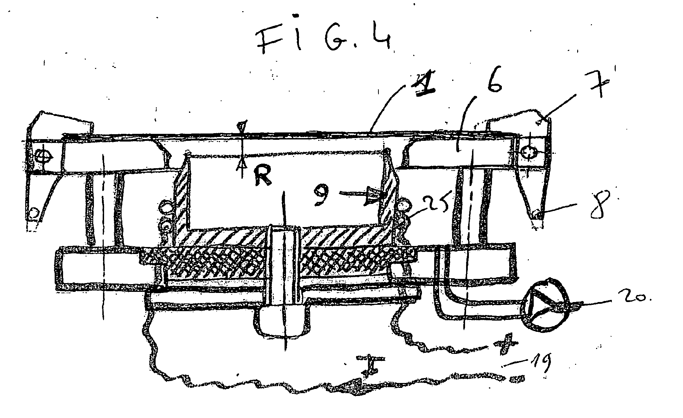

La figure 3 donne une représentation schématique du dispositif selon l'invention. Il comprend un carrousel E d'entrée de conteneurs (2), un carrousel D de maintien des conteneurs (2), une roue de chauffage RC, une bobine (18) d'arrivée de film (11), un carrousel de sortie S de conteneurs (2) et une bobine RS de rouleau squelette. Dans chaque alvéole (17) de la roue de chauffage, on dispose un poste de découpe chauffant du film, tel que représenté sur la figure 4. On désigne par (24) la zone de contact de la roue de chauffage et du carrousel D de maintien des conteneurs (2) : c'est à cet endroit qu'a lieu la pose, le collage et la découpe du film. Cette dernière opération est effectuée en une durée compatible avec les cadences des lignes industrielles.

Avant de voir le fonctionnement du dispositif, il est important de décrire le poste de découpe du film de la figure 4. Ce poste comprend un support (6) sur lequel repose le film (1). Le film est maintenu en place à l'aide de pince (7) que l'on peut ouvrir en la tournant autour de l'axe (8). A l'intérieur du support (6) est placé un élément de découpe (9) chauffant permettant une coupe immédiate et franche du film : l'élément de découpe (9) est placé dans le support (6) et chauffé de préférence à l'aide d'une résistance (25) reliée au secteur en (19). La liaison (20) permet de faire le vide à l'extérieur du couteau (9) pour améliorer la découpe du film.

On peut maintenant passer au mode de fonctionnement du dispositif selon l'invention :
On se place dans ce cas sur la figure 3. L'entrée des conteneurs (2) se fait en même temps et à la même vitesse que l'arrivée du film (11). Les conteneurs (2) arrivent par le carrousel E d'entrée des conteneurs dans les alvéoles (15). Ces conteneurs passent ensuite sur le carrousel D de maintien des conteneurs dans les alvéoles (16). Les conteneurs arrivent alors dans la zone (24). De l'autre côté, depuis la bobine (18), le film (11) est entrainé sur la roue de chauffage RC. Le film est chauffé par les éléments de chauffage (10) disposés sur une partie de la roue RC. Chaque alvéole (17) de la roue comporte un poste tel que représenté sur la figure 4. Lorsque le film chauffé arrive dans la zone (24), comme le conteneur va appuyer sur ledit film, celui-ci va réduire sa distance R au système de découpe (9) jusqu'à appuyer contre ledit système de découpe et ainsi réaliser la découpe et en même temps le collage contre la surface extérieure dudit conteneur.

Comme déjà mentionné ci-dessus, on peut prévoir une dépose de colle (12) sur le conteneur même ou alors selon une autre alternative sur le film en (13).

Lorsqu'on a collé sur le conteneur le film, celui-ci est entrainé vers un carrousel de sortie S. De même, le film (11) évidé ressort sur la bobine RS.

On arrive ainsi selon l'invention à fabriquer un conteneur comprenant un corps plastique avec un film plastique collé sur ledit conteneur. Dans les cas présent, le conteneur est en PET et le film en PEBD. On peut ainsi utiliser un film imprimé de bonne qualité qui valorise bien le produit du conteneur, ainsi que l'ensemble. Au moment de l'utilisation, on a un conteneur dans lequel le film suivra bien la déformation du conteneur pour ainsi permettre une bonne sortie de tout le contenu.

### Abréviations

PET = Polyéthylène Téréphthalate
PE = Poly Ethylène
PVC = Polychlorure de vinylidène
PEBD = Polyéthylène basse densité
PP = Polypropylène
PS = Polystyrène

## Revendications

1. Procédé pour la fabrication d'un conteneur (2), comprenant un corps (23), un col (22) et un élément de fermeture (21), ledit corps (23) ayant une surface de courbure positive, dans lequel
- on amène sur un carrousel des conteneurs (2) remplis,
- on amène sur une roue de chauffage (RC) un film (11) d'un matériau plastique depuis un rouleau, le carrousel et la roue de chauffage se rejoignant sur une zone de contact (24) de leur circonférence.
- on dispose de la colle (12) sur le film ou sur le conteneur et on chauffe ledit film sur tout le pourtour de la roue de chauffage, **caractérisé en ce que** :
- on applique le film chauffé sur une partie de la surface extérieure du conteneur, de manière à étirer le film et le coller,
- on découpe simultanément le film et
- on ressort le conteneur.

2. Procédé selon la revendication 1, **caractérisé en ce qu'**on chauffe le film à une température correspondant à son point de ramollissement.

3. Procédé selon l'une des revendications 1 ou 2, **caractérisé en ce que** la roue de chauffage tourne à des vitesses compatibles avec des lignes industrielles.

4. Dispositif pour la mise en oeuvre du procédé selon les revendications 1 à 3, comprenant
- un carrousel (D) pour les conteneurs remplis,
- une roue de chauffage (RC) du film, le carrousel et la roue de chauffage ayant une zone de contact (24) sur leur circonférence.
la roue de chauffage du film (11) comprenant sur toute sa périphérie plusieurs postes **caractérisé en ce que** chaque poste comporte un système de support (6) du film et un système de découpe chauffant placé dans le système de support (6).

5. Dispositif selon la revendication 4, **caractérisé en ce que** la roue de chauffage comporte entre 20 et 40 postes.

6. Dispositif selon l'une des revendications 4 ou 5, **caractérisé en ce que** le système de découpe (9) est sensiblement circulaire.

## Claims

1. Process for manufacturing a container (2) comprising a body (23), a neck (22) and a closing element (21), the said body (23) having a surface with a positive curvature, in which process
- filled containers (2) are conveyed onto a carousel;
- a film (11) made of a plastic material is conveyed onto a heating wheel (RC) from a roll, the carousel and the heating wheel meeting over a zone of contact (24) on their circumference;
- adhesive (12) is disposed on the film or on the container and the said film is heated over the entire periphery of the heating wheel;
**characterised in that**:
- the heated film is applied to part of the outer surface of the container, so as to stretch the film and stick it on;
- the film is simultaneously cut and
- the container is taken out again.

2. Process according to claim 1,
**characterised in that**
the film is heated to a temperature that corresponds to its softening point.

3. Process according to either of claims 1 or 2,
**characterised in that**
the heating wheel rotates at speeds which are compatible with factory lines.

4. Device for implementing the process according to claims 1 to 3, said device comprising:
- a carousel (D) for the filled containers (RC);
- a wheel for heating the film, the carousel and the heating wheel having a zone of contact (24) on their circumference;
the wheel for heating the film (11) comprising, over its entire periphery, a number of stations,
**characterised in that**
each station (6) has a system for supporting the film and a heating cutting system (9) located in the supporting system (6).

5. Device according to claim 4,
**characterised in that**
the heating wheel has between 20 and 40 stations.

6. Device according to either of claims 4 or 5,
**characterised in that**
the cutting system (9) is substantially circular.

## Patentansprüche

1. Verfahren zur Herstellung eines Behälters (2), der einen Körper (23), einen Hals (22) und ein Verschlusselelement (21) umfasst, wobei der Körper (23) eine positiv gekrümmte Oberfläche besitzt, bei dem man
- auf einem Kreisförderer gefüllte Behälter (2) zuführt,
- auf einem Heizrad (Rc) eine Folie (11) aus Kunststoff von einer Rolle zuführt, wobei der Kreisförderer und das Heizrad sich auf einer Kontaktzone (24) ihres Umfangs (12) treffen,
- auf der Folie oder auf dem Behälter Klebstoff anordnet und die Folie auf dem ganzen Umfang des Heizrades erhitzt,
**dadurch gekennzeichnet, dass**
man die erhitzte Folie auf einen Teil der Außenfläche des Behälters so auflegt, dass die Folie gereckt und verklebt wird,
- man gleichzeitig die Folie schneidet und
- man den Behälter entnimmt.

2. Verfahren nach Anspruch 1, **dadurch gekennzeichnet, dass** man die Folie auf eine Temperatur erhitzt, die ihrem Erweichungspunkt entspricht.

3. Verfahren nach einem der Ansprüche 1 oder 2, **dadurch gekennzeichnet, dass** das Heizrad sich mit Geschwindigkeiten dreht, die mit Industriestrecken kompatibel sind.

4. Vorrichtung zur Durchführung des Verfahrens nach den Ansprüchen 1 bis 3, umfassend
- einen Kreisförderer (D) für die gefüllten Behälter,
- ein Rad (Rc) zum Erhitzen der Folie, wobei der Kreisförderer und das Heizrad eine Kontaktzone (24) auf ihrem Umfang aufweisen,
wobei das Rad zum Erhitzen der Folie (11) auf seinem ganzen Umfang mehrere Stationen umfasst, **dadurch gekennzeichnet, dass** jede Station ein System (6) zum Tragen der Folie und ein in dem Tragsystem (6) angeordnetes beheiztes Schneidsystem (9) umfasst.

5. Vorrichtung nach Anspruch 4, **dadurch gekennzeichnet, dass** das Heizrad zwischen 20 und 40 Stationen umfasst.

6. Vorrichtung nach einem der Ansprüche 4 oder 5, **dadurch gekennzeichnet, dass** das Schneidsystem im Wesentlichen kreisförmig ist.
